# EUROPÄISCHE PATENTSCHRIFT

(11) **EP 1 754 652 B1**
(45) Veröffentlichungstag und Bekanntmachung des Hinweises auf die Patenterteilung: **20.10.2010**
(21) Anmeldenummer: 06016426.6
(22) Anmeldetag: 07.08.2006
(51) Int. Cl.: B62D 25/08, B60R 19/56, B62D 65/16

(54) **Fahrzeugrahmen für ein Nutzfahrzeug**
Vehicle body frame for a utiliity vehicle.
Câssis du véhicule pour une véhicule utilitaire.

(30) Priorität: 18.08.2005 DE 102005038981
(43) Veröffentlichungstag der Anmeldung: 21.02.2007
(73) Patentinhaber: MAN Nutzfahrzeuge Aktiengesellschaft, 80976 München (DE)
(72) Erfinder: Harmeier, Reinhard, 82194 Gröbenzell (DE); Marquardt, Walter, 81249 München (DE); Schaller, Karl Viktor, Dr.-Ing., 82194 Gröbenzell (DE)

(56) Entgegenhaltungen:
- EP-A1- 1 153 821
- EP-A2- 1 266 818
- EP-A2- 1 600 335
- WO-A-02/070327
- DE-A1- 4 006 418
- DE-A1- 10 308 002
- DE-A1- 19 637 920

## Beschreibung

Die Erfindung betrifft einen Fahrzeugrahmen für ein Nutzfahrzeug mit zwei Rahmenlängsträgern, welche mit Querträgern verteilt über der Fahrzeuglänge mehrfach miteinander verbunden sind, wobei die Frontbereiche der beiden Rahmenlängsträger mit einem Frontquerträger miteinander verbunden sind, und wobei der Frontquerträger über Verbindungskörper an den Enden der Rahmenlängsträger angebunden ist.

Frontquerträger sind in der hier interessierenden Form bereits bekannt, welche im Wesentlichen die Funktion der Steifigkeitserhöhung des Fahrzugrahmens erfüllen. Vereinzelt sind darüber hinaus Frontquerträger offenbart, welche Anbindungspunkte zur Befestigung von Bauteilen und -gruppen aufweisen.

Dieser Erfindung liegt als Stand der Technik unter anderem die deutsche Offenlegungsschrift DE 198 092 09 A1 zu Grunde. Diese Schrift offenbart ein Fahrgestell eines Frontlenker-Lastkraftwagens mit kippbarem Fahrerhaus, mit einem Rahmen, dessen beide Längsträger über mehrere Querträger miteinander verbunden sind, und mit einer starren Vorderachse, deren Starrachskörper über Längslenker an rahmenfesten Stellen angelenkt ist. Die vorderen Enden der beiden Rahmenlängsträger sind durch einen - von vorne gesehen - im wesentlichen U-förmigen Querträger miteinander verbunden, der sich aus zwei jeweils an einem Rahmenlängsträger angeflanscht befestigten Multifunktionslagerschilden und einer sich unten zwischen diesen erstreckenden, jeweils endseitig mit diesen verbundenen Quertraverse zusammensetzt. Die beiden Multifunktionslagerschilde fungieren dabei als Halter, Stütz-, Lager- und Befestigungsorgan für eine Anzahl verschiedener Fahrzeugteile.

Bei einem derartigen Frontquerträger ist es von wesentlichem Nachteil, dass zum Aufbau eine Vielzahl von Bauteilen erforderlich ist, welche überwiegend nicht aus standardisierten Halbzeugen herstellbar sind und ein hohes Gesamtgewicht des Frontquerträgers bewirken. Der hohe Grad an speziell ausgeformten und angepassten Bauteilen, welche mittels Ur- und Umformverfahren hergestellt sind, ermöglicht keine optionale Konfiguration des Frontquerträgers an andere Ausstattungsvarianten oder Typen des Nutzfahrzeugs, wobei das Kühler- /lüfteraggregat räumlich vorgelagert ist und damit in seiner Gesamtheit hinsichtlich des Platzbedarfs als nicht optimal angesehen werden muss.

Im Folgenden werden weitere Fahrzeugrahmen bzw. Frontquerträger aus dem Stand der Technik beschrieben, welche ähnliche und weitere Defizite aufweisen.

Aus der deutschen Offenlegungsschrift DE 196 37 920 A1 ist ein aus drei Guss- oder Schmiedeteilen bestehendes Zusatzfahrgestellteil zur Befestigung an einem Fahrgestell eines Schwerfahrzeugs bekannt, das eine Vielzahl von Verankerungspunkten aufweist. Die Verankerungspunkte sind dabei in dem Zusatzfahrgestellteil angeordnet, um eine Vielzahl von Fahrzeugsystemen und/oder -komponenten daran zu befestigen, wie Abschleppbolzen, Lenkgehäuse, eine Gangwählvorrichtung, Kabinenlagerstreben, Kabinenkippvorrichtungen, Kühler, Stoßstangen und andere Träger. Diese bekannte Vorrichtung ist in struktureller Hinsicht jedoch nicht dazu geeignet, als Trägereinheit für die genannten Komponenten zu dienen und im vormontierten Zustand zusammen mit diesen in einem Arbeitsschritt am Fahrzeug verbaut zu werden.

Die europäische Patentanmeldung EP 1 266 818 A2 beschreibt unter anderem einen Modulträger, welcher an einen Kraftfahrzeugkarosserierahmen angebaut ist und dessen Seitenteile bzw. Rahmenlängsträger miteinander verbindet. Der Modulträger besteht aus einem oberen Trägerrahmen bzw. U-Profil-Strebe und einem unteren Trägerrahmen bzw. U-Profil-Strebe, welche über zwei weitere Streben miteinander verbunden sind, die somit den Modulträger geschlossen machen. Der Modulträger nimmt im ein- bzw. angebauten Zustand in seinem inneren (offenen) Bereich zusätzliche Bauteile für ein Kühlsystem auf und kann nach dem Baukastenprinzip vorab zusammengesetzt werden.

Ferner beschreibt die deutsche Offenlegungsschrift DE 103 08 002 A1 einen hinter Knautschzonen befestigten Frontquerträger bestehend aus einer vorderen Endwand, die einen Kühler aufweist. Der Kühler ist dabei einstückig mit der vorderen Endwand ausgebildet. Die vordere Endwand ist als rechteckige, rahmenförmige Struktur ausgebildet und besteht aus zwei vertikalen Streben und zwei horizontalen Trägem. Ferner ergibt sich aus dieser Schrift, dass mit der vorderen Endwand neben dem Kühler auch ein Klimaanlagenkondensator einstückig ausgebildet ist.

Um die Emissionswerte neuerer Abgasbestimmungen für die in Nutzfahrzeugen üblichen wassergekühlten Dieselmotoren zu erreichen, wird mehr Kühlleistung nötig. Daraus folgt die Notwendigkeit größerer Kühlmodule, welche einen größeren Einbauraum erfordern. Gemäß dem Stand der Technik ist der Frontquerträger entweder zwischen die beiden Rahmenlängsträger oder an ein spezielles Frontteil montiert, wohingegen das Kühlmodul zwischen den Längsträgern oder an dem Frontteil meistens über Gummiteile befestigt ist, wobei erheblicher Bauraum erforderlich ist und die Integration größerer Kühlmodule nicht oder nur eingeschränkt möglich ist.

Es ist daher die Aufgabe der vorliegenden Erfindung, einen Fahrzeugrahmen für ein Nutzfahrzeug zu schaffen, welcher einen multifunktionalen Frontquerträger aufweist, der eine bauraumminimale Integration zumindest eines Kühlmoduls in den Vorderwagen des Nutzfahrzeugs ermöglicht, und einen einfachen und kostengünstigen Aufbau aufweist.

Diese Aufgabe wird erfindungsgemäß durch einen Fahrzeugrahmen für ein Nutzfahrzeug mit den Merkmalen des Patentanspruchs 1 gelöst. Vorteilhafte Weiterbildungen der Erfindung sind in den abhängigen Ansprüchen angegeben.

Die Erfindung schließt die technische Lehre ein, dass der Frontquerträger als modulares und eine Mehrzahl von Konstruktionselementen aufweisendes Schweißgerippe aufgebaut ist und als geschlossen rahmenförmige, multifunktionale Trägereinheit zur Aufnahme von zumindest einem Kühlmodul ausgebildet ist. Die Konstruktionselemente sind hierbei mit dem zumindest einen Kühlmodul verschachtelt, wobei zumindest zwei Konstruktionselemente zwischen einem ersten Kühlmer und einem zweiten Kühlmer angeordnet sind.

Diese Lösung bietet den Vorteil, dass der Frontquerträger als Trägerrahmen ausgebildet ist, welcher zumindest ein Kühlmodul aufnimmt. Die Aufnahme des Kühlmoduls erfolgt in integrierter Form, sodass das Kühlmodul nicht am Frontquerträger über Gummielemente befestigt wird, sondern im Wesentlichen in der rahmenförmigen Trägereinheit integriert ist, sodass keine weiteren tragenden Elemente für das Kühlmodul nötig sind. Die steifigkeitsbildenden Komponenten des Frontquerträgers sind um zumindest einen Teil des Kühlmoduls herum angeordnet, sodass eine optimierte Integrationsdichte aus dem Frontquerträger und dem Kühlmodul erreicht wird. Das im Frontquerträger aufgenommene Kühlmodul weist dabei zumindest einen Hauptkühler und einen Zusatzkühler auf. Der Hauptkühler kann in der Rahmenebene des Frontquerträgers integriert werden, wobei der Zusatzkühler planparallel zum Hauptkühler angeordnet wird. Zwei oder mehrere horizontal verlaufende Rohrstreben befinden sich zwischen dem Hauptkühler und dem Zusatzkühler, sodass steifigkeitserhöhende Konstruktionselemente mit dem Kühlmodul verschachtelt sind. Mit dieser Lösung ist es möglich, die Größe des Kühlers den Erfordernissen größerer Kühlleistung anzupassen, ohne die erforderliche Steifigkeit des Frontquerträgers aus Platzgründen zu reduzieren. Die Ausführung des Frontquerträgers als Schweißgerippe ermöglicht einen modularen Aufbau mehrerer Konstruktionselemente, welche die rahmenförmige, multifunktionale Trägereinheit bilden. Damit kann auf eine schwere Guss- oder Schmiedekonstruktion verzichtet werden, wobei modell- oder ausstattungsabhängig der Frontquerträger modular an das Nutzfahrzeug angepasst werden kann, indem das Schweißgerippe auf einfache Weise erweitert oder reduziert wird, oder indem Konstruktionselemente ausgetauscht werden.

Vorteilhafterweise weisen die Konstruktionselemente zum modularen Aufbau des Frontquerträgers insbesondere Pressteile, Halbzeuge wie Rohre, Bleche und /oder Schmiedeteile auf. Ein Schweißgerippe aus standardisierten Halbzeugen ermöglicht einen kostenminimalen Aufbau, da die Halbzeuge lediglich mit geringem Aufwand an die geometrischen Abmessungen der Trägereinheit angepasst werden müssen und als Fügeoperation im Wesentlichen nur der Schweißprozess folgt. Derartige Halbzeuge können Rohre, Bleche oder Profile umfassen, welche standardisierten und bestenfalls genormten Grundabmessungen entsprechen. Zur Anpassung an die Maße des Schweißgerippes sind diese standardisierten Materialien wie beispielsweise U-Profile oder Rohre nur an die Länge anzupassen und ggf. in einfachen Schritten umzuformen.

Nach einer möglichen Weiterbildung der Erfindung wird vorgeschlagen, dass die Montage des Kühlmoduls im Frontquerträger vor der Montage des Frontquerträgers im Fahrzeugrahmen ausführbar ist. Der Frontquerträger wird mittels zweier Verbindungskörper an den Enden der Rahmenslängsträger montiert, wobei die Verbindungskörper dabei als ein- oder mehrteilige Verbindungselemente zwischen den Enden der Rahmenlängsträger und dem Frontquerträger angeordnet sind. Die Verbindung zwischen dem Frontquerträger und den Rahmenlängsträgern kann dabei geschraubt und/ oder mit vergleichbaren, insbesondere lösbaren Montageelementen verbunden werden, sodass der Frontquerträger frei an den Verbindungskörpern montierbar und demontierbar ist. Somit ist der Frontquerträger im nicht eingebauten Zustand in sich montierbar, wobei darüber hinaus die Aggregate, insbesondere jedoch das Kühlmodul an den Frontquerträger vormontierbar sind. Nach erfolgter Vormontage kann die gesamte Einheit aus Frontquerträger, Kühlmodul und möglichen weiteren Aggregaten mittels der rechtsseitig und linksseitig angeordneten Verbindungskörper in den Rahmen des Nutzfahrzeugs integriert werden. Gegebenenfalls kann vor dem Einbau der Einheit die Funktion der Komponenten und Aggregate vorgeprüft werden, wobei diese nach dem Einbau nur noch mit der Peripherie des Nutzfahrzeugs verbunden werden und notwendige Betriebsstoffe eingefüllt werden.

Die an den Frontquerträger montierbaren und/oder vormontierbaren Aggregate können weiterhin zumindest einen Kältemittelkondensator, einen Ladeluftkühler, einen Ölkühler und/oder einen Wasserkühler für einen Niedertemperaturkreislauf umfassen. Die Aggregate können darüber hinaus alle Bauteile betreffen, welche einen konvektiven Wärmeaustausch mit dem Fahrtluftstrom im Betrieb des Nutzfahrzeugs erfordern, sodass diese vorzugsweise im Frontbereich des Fahrzeugs angeordnet werden. Die Komponenten können dabei voreinander, seitlich oder über Halterungen am Frontquerträger montiert werden, wobei diese zumindest teilweise ebenfalls vormontierbar sind.

Vorteilhafterweise ist ein bodenseitiger Rahmenteil des Frontquerträgers als Frontunterfahrschutzprofil ausgebildet, wobei dieser außenseitig Aufstiegsträger aufweist. Das Frontunterfahrschutzprofil erfüllt damit sowohl eine steifigkeitsbildende Funktion als auch die Bildung eines Frontunterfahrschutzes. Das Frontunterfahrschutzprofil ist als Rohrkonstruktion ausgeführt, welches beidseitig außen in die Aufstiegsträger übergeht, auf denen Trittelemente montierbar sind, um eine Einstiegshilfe für den Fahrzeugführer in das Führerhaus zu bilden. Das Frontunterfahrschutzprofil bildet den unteren Abschluss des Frontquerträgers, und weist einen mittleren, geraden Rohabschnitt auf, über den sich die multifunktionale Trägereinheit des Frontquerträgers erstreckt, wobei diese an zumindest zwei Anbindungsstellen angeschweißt ist. Damit bildet der mittlere Abschnitt des Frontunterfahrschutzprofils den unteren Rahmenteil für die Aufnahme der zusätzlichen Aggregate und insbesondere des Kühlmoduls. Der sich seitlich vom Rahmenabschnitt erstreckende Teil des Frontunterfahrschutzprofils ist entgegen der Fahrtrichtung U-förmig umgebogen und geht außenseitig in die Trittelemente über.

Eine weitere die Erfindung verbessernde Maßnahme sieht vor, dass der Frontquerträger Aufnahmeelemente für eine Abschleppeinrichtung aufweist, über die wahlweise ein Sonderquerträger und /oder eine Geräteplatte befestigbar ist. Die Aufnahmeelemente können vorzugsweise im Gieß- oder Schmiedeverfahren hergestellt sein, und sind an senkrecht angeordneten Trägerseitenteilen angeordnet. Die Aufnahmeelemente sind jeweils mit einem Innengewinde versehen, in welches eine Abschleppvorrichtung eingeschraubt werden kann, sodass die Innengewinde in den Aufnahmeelementen zur Fahrtrichtung hin geöffnet sind. Rückseitig können die Aufnahmeelemente teilweise die Montageanbindung für die Verbindungskörper zur Verbindung mit den Rahmenlängsträgern bilden. Die Befestigung der Aufnahmeelemente an die Trägerseitenteile erfolgt über Verbindungselemente wie beispielsweise Schrauben oder Nieten oder über eine Schweißverbindung. An den Aufnahmeelementen kann die zusätzliche Montage eines Sonderquerträgers erfolgen oder eine weitere Geräteplatte zur Aufnahme weiterer Aggregate angebracht werden.

Als eine konstruktive Ausführung der Trägereinheit ist vorgesehen, dass der Frontquerträger einen linken und einen rechten Trägerseitenteil aufweist, wobei die Trägerseitenteile senkrecht und im Wesentlichen parallel zueinander angeordnet sind und über zumindest eine und vorzugsweise zwei horizontal verlaufende Rohrstreben miteinander verbunden sind. Die Trägerseitenteile bestehen aus einem U-Profil, wobei die U-Öffnung nach innen gerichtet angeordnet ist. Die Trägerseitenteile bilden den vertikalen Teil des Frontquerträgers und sind an der unteren Seite mit dem Frontunterfahrschutzprofil verschweißt. Die Trägerseitenteile sind mittels horizontal verlaufender Rohrstreben miteinander verbunden, wobei die Rohrstreben endseitig zwischen den Trägerseitenteilen angeschweißt sind. Mittels der Rohrstreben kann die erforderliche Steifigkeit in die Konstruktion des Frontquerträgers eingebracht werden, wobei vorzugsweise zwei parallel mit dem Frontunterfahrschutzprofil verlaufende Rohrstreben vorgesehen werden können. Die obere Rohrstrebe kann Befestigungsfunktionen für Anbauteile aufweisen, um Leitungen, Behälter oder Zusatzkühler wie Öl- oder Ladeluftkühler aufzunehmen.

Als weitere vorteilhafte Ausführung zur Erweiterung der Integrationsdichte des Frontquerträgers ist vorgesehen, dass die Trägerseitenteile Halterungen zur Aufnahme einer Fahrerhauslagerung aufweisen. Die Halterungen für die Fahrerhauslagerungen sind im oberen Bereich außenseitig am linken und rechten Trägerseitenteil angebracht, wobei die Halterungen eine Gelenkaufnahme für eine Schwinge bilden, welche über ein Dämpferelement das Fahrerhaus schwingungsgedämpft aufnimmt, wobei das Dämpferelement rückseitig am Aufnahmeelement angebunden ist. Somit wird eine Schwinganordnung geschaffen, welche das Fahrerhaus gegen den Frontquerträger schwingend abstützt. Die Halterungen mit der Schwinge, dem Dämpferelement und der rückseitigen Anbindung an das Aufnahmeelement sind dabei links- und rechtsseitig am Frontquerträger vorhanden.

Vorteilhafterweise weist der linke oder rechte Trägerseitenteil jeweils ein Lagerbock für die Aufnahme einer Lenkwellen-Zwischenlagerung und /oder eines Lenkwellen-Umlenkgetriebes auf. Der Lagerbock kann einteilig mit der Halterung zur Aufnahme einer Fahrerhauslagerung ausgeführt sein, sodass außenseitig an der Halterung eine Aufnahmemöglichkeit zur Anbindung von Lenkungsteilen vorliegt. Somit ist vorteilhafterweise eine weitere Erhöhung der Integrationsumfangs des Frontquerträgers gegeben, indem Lenkungsteile mit aufnehmbar und ggf. mit vormontierbar sind.

Weiterhin kann der Frontquerträger Halterungen für Leitungsführungen wie Druckluftleitungen, elektrische Leitungen, Kältemittelleitungen, Ölleitungen und /oder Wasserleitungen sowie Befestigungselemente für einen Stoßfänger und /oder eine Beleuchtungseinheit aufweisen. Die Halterungen sind beispielsweise als angeschweißte Blechteile ausgeführt, welche vorzugsweise außenseitig an den Trägerseitenteilen oder am Frontunterfahrschutzprofil angebracht sind und Ösen, Löcher, Klammern oder ähnliche Strukturen zur Anbindung aufweisen. Die Befestigungselemente für einen Stoßfänger und /oder eine Beleuchtungseinheit sind im vorderen Bereich des Frontquerträgers entweder am Frontunterfahrschutzprofil oder an den Trägerseitenteilen angeordnet und liegen als zungenförmige Laschen in der senkrechten Planebene des Frontquerträgers.

Eine vorteilhafte Ausführungsform der Erfindung sieht vor, dass der Frontquerträger einen Abschlussquerträger aufweist, an welchem zumindest der Zusatzkühler und /oder ein Behälter sowie weitere externe Mittel montierbar sind, wobei der Abschlussquerträger zwischen den oberen Enden des linken und rechten Trägerseitenteils angeordnet ist. Mittels des Anschlussquerträgers kann eine Befestigungsmöglichkeit für die Komponenten des Kühlmoduls und der weiteren Aggregate wie ein Zusatzkühler geschaffen werden. Die Anbringung des Abschlussquerträgers erfolgt nach dem Einbau des Hauptkühlers und bildet hierfür einen oberen Abschluss.

Gemäß einem weiteren Ausführungsbeispiel ist vorgesehen, dass der Frontquerträger an einen entsprechend ausgebildeten Fahrschemel eines Nutzfahrzeugs mit Einzelradaufhängung an der Vorderachse montierbar ist, wobei die Halterungen und /oder Lagerböcke und /oder Befestigungselemente anpassbar sind. Aufgrund der sich mit der Montage an den Fahrschemel an der Vorderachse ändernden geometrischen Bedingungen gestattet der modulare Aufbau des Frontquerträgers die Anpassung der zusätzlich angeordneten Module und insbesondere der Fahrerhauslagerung, wobei die Vorteile der Konstruktion als Schweißgerippe und der modularen, rahmenförmigen Ausführung auch in diesem Ausführungsbeispiel nutzbar sind.

Weitere die Erfindung verbessernde Maßnahmen sind in den Unteransprüchen angegeben oder werden nachstehend gemeinsam mit der Beschreibung eines bevorzugten Ausführungsbeispiels der vorliegenden Erfindung anhand der Figuren näher dargestellt. Es zeigt:
- Fig. 1: eine perspektivische Darstellung des Frontquerträgers mit einem integrierten Kühl- modul, einer Fahrerhauslagerung und weiteren Anbauteilen;
- Fig. 2: eine perspektivische Darstellung des Frontquerträgers mit integriertem Haupt- und Zusatzkühler;
- Fig. 3: eine perspektivische Darstellung des Schweißgerippes des Frontquerträgers;
- Fig. 4: eine Darstellung des Frontquerträgers mit einem Abschlussquerträger in perspekti- vischer Ansicht; und
- Fig. 5: eine Darstellung des Schweißgerippes des Frontquerträgers mit einer oberen Rohrstrebe mit Befestigungsfunktion für Anbauteile.

Bei den Figuren handelt es sich lediglich um beispielhafte schematische Darstellungen.

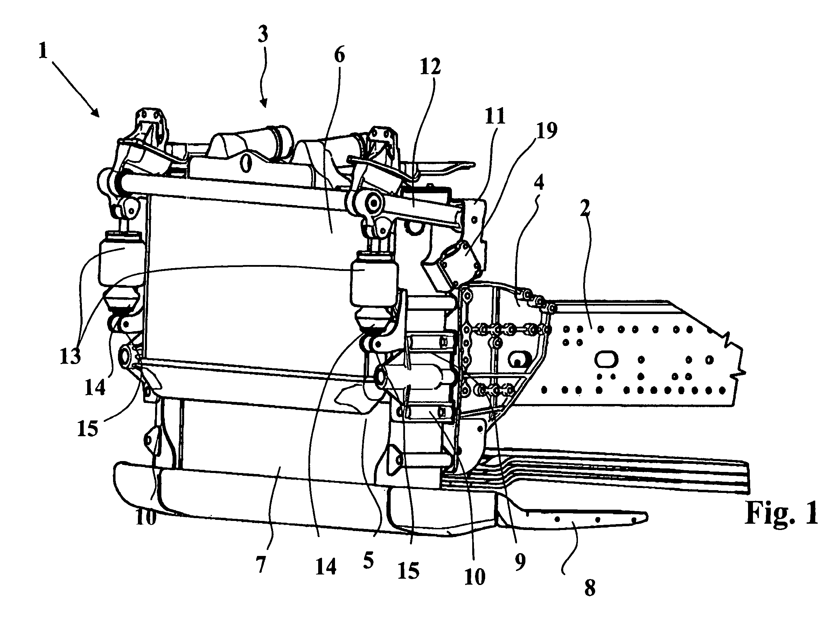

Der in Fig. 1 perspektivisch dargestellte Fahrzeugrahmen 1 ist Teil des vorderen Bereiches des Rahmens eines Nutzfahrzeugs und weist im Wesentlichen zwei längs in Fahrtrichtung geführte Rahmenlängsträger 2 auf, welche am vorderen Ende quer zur Fahrtrichtung mit einem Frontquerträger 3 miteinander verbunden sind. Die Verbindung zwischen den Rahmenlängsträgern 2 und dem Frontquerträger 3 weist zwei Verbindungskörper 4 auf, wobei aufgrund der Perspektive der Ansicht nur ein Verbindungskörper 4 sichtbar ist. Die Verbindungskörper 4 weisen eine winkelförmige Struktur auf und sind seitlich an den Rahmenlängsträgern 2 und am Frontquerträger 3 verschraubt. Der Frontquerträger 3 ist rahmenförmig ausgebildet und nimmt zumindest ein Kühlmodul auf, wobei das Kühlmodul zumindest einen Hauptkühler 5 und einen Zusatzkühler 6 umfasst. Der Hauptkühler 5 ist im Rahmen des Frontquerträgers 3 angeordnet, und der Zusatzkühler 6 befindet sich planparallel und in Fahrtrichtung vor dem Hauptkühler 5.

Im unteren Bereich des Rahmens des Frontquerträgers 3 liegt ein Frontunterfahrschutzprofil 7, wobei dieses im Wesentlichen aus einem Rohrmaterial besteht und links- und rechtsseitig U-förmig entgegen der Fahrtrichtung umgebogen ist. An den Enden des Frontunterfahrschutzprofils 7 sind Aufstiegsträger 8 ausgebildet, welche eine Einstiegshilfe für den Fahrzeugführer zum Ein- und Aussteigen aus dem Fahrerhaus bieten.

Die Anbindung des Frontquerträgers 3 an die Verbindungskörper 4 erfolgt über Aufnahmeelemente 9, welche links- und rechtsseitig an Trägerseitenteilen 10 angeschraubt oder angeschweißt sind, die den senkrechten Teil des rahmenförmigen Frontquerträgers 3 bilden. Die Aufnahmeelemente 9 sind mit in Fahrtrichtung weisenden Innengewinden 15 versehen, um gegebenenfalls eine Abschleppeinrichtung einzuschrauben. Seitlich an den Trägerseitenteilen 10 sind Halterungen 11 zur Aufnahme einer Fahrerhauslagerung 12 angeordnet, welche über Feder-Dämpferelemente 13 gegenüber dem starren Rahmen des Frontquerträgers 3 in senkrechter Richtung schwingend gelagert ist. Die Feder-Dämpferelemente 13 sind rückseitig über eine Dämpferaufnahme 14 an den Trägerseitenteilen 10 angebunden. Weiterhin sind seitlich an den Trägerseitenteilen 10 Lagerböcke 19 angeordnet, um eine Aufnahme einer nicht weiter dargestellten- Lenkwellen-Zwischenlagerung und /oder eines Lenkwellen-Umlenkgetriebes zu schaffen.

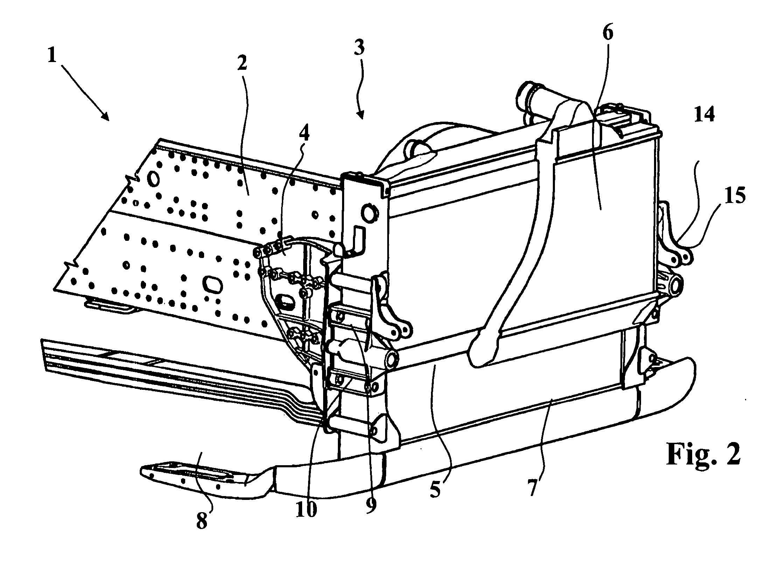

Figur 2 zeigt eine perspektivische Darstellung des Frontquerträgers 3 mit integriertem Hauptkühler 5 und vor dem Hauptkühler 5 angeordneten, halb geschnitten dargestellten Zusatzkühler 6. Die Anordnung der Rahmenlängsträger 2, der Verbindungskörper 4, der Aufnahmeelemente 9 mit integrierten Innengewinden 15 und der Dämpferaufnahme 14 sind neben weiteren in dieser Darstellung nicht gezeigten Anbindungselementen in Fahrtrichtung symmetrisch links- und rechtsseitig am Frontquerträger 3 aufgebaut. Den unteren Abschluss bildet ein Frontunterfahrschutzprofil 7, welches sich über der gesamten Breite des Nutzfahrzeugs erstreckt.

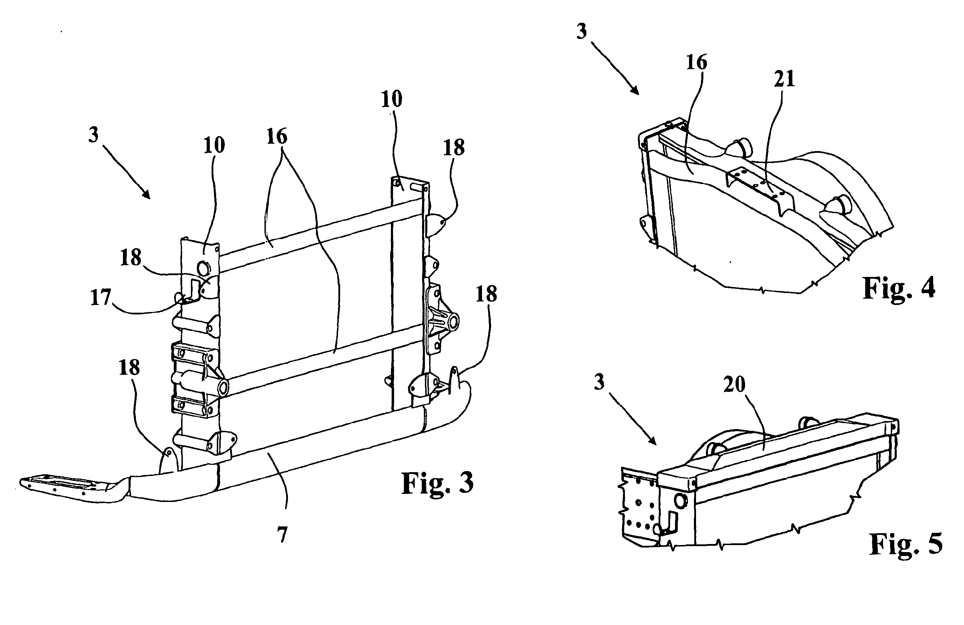

Fig. 3 zeigt das Schweißgerippe, welches die Grundstruktur des Frontquerträgers 3 bildet. Im Wesentlichen weist dieses zwei senkrecht angeordnete, U-förmige Trägerseitenteile 10 auf, welche mit dem eine untere Traverse bildenden Frontunterfahrschutzprofil 7 und horizontal verlaufenden Rohrstreben 16 einen verwindungssteifen Rahmen bilden. Weiterhin sind Halterungen 17 beispielsweise für Leitungsführungen wie Druckluftleitungen, elektrische Leitungen, Kältemittelleitungen, Ölleitungen und /oder Wasserleitungen vorgesehen. Weitere Befestigungselemente 18 dienen der Aufnahme eines Stoßfängers und / oder einer in der Darstellung nicht näher gezeigten Beleuchtungseinheit.

Figur 4 zeigt eine Ausführung einer oberen Rohrstrebe 16, welche eine Halterung 21 für Anbauteile aufweist, um Leitungen, Behälter oder Zusatzkühler wie Öl- oder Ladeluftkühler aufzunehmen. Die obere Rohrstrebe 16 ist dafür leicht nach oben gebogen, um die Halterung 21 entsprechend anzuordnen, sodass die Zusatzaggregate außerhalb des Trägerrahmens des Frontquerträgers 3 angeordnet werden können. In der Figur 5 ist ein Frontquerträger 3 gezeigt, welcher einen Abschlussquerträger 20 aufweist, der den oberen Abschluss des Frontquerträgers 3 bildet. Der Abschlussquerträger 20 ist am oberen Ende zwischen den beiden Trägerseitenteilen 10 eingesetzt, und bietet eine Befestigungsmöglichkeit für die Komponenten des Kühlmoduls. Die Anbringung des Abschlussquerträgers 20 erfolgt nach dem Einbau des Hauptkühlers 5 und bildet hierfür einen oberen Abschluss.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- **1**: Fahrzeugrahmen
- **2**: Rahmenlängsträger
- **3**: Frontquerträger
- **4**: Verbindungskörper
- 5: Hauptkühler
- **6**: Zusatzkühler
- **7**: Frontunterfahrschutzprofil
- **8**: Aufstiegsträger
- **9**: Aufnahmeelement
- **10**: Trägerseitenteil
- **11**: Halterung
- **12**: Fahrerhauslagerung
- **13**: Feder-Dämpferelement
- **14**: Dämpferaufnahme
- **15**: Innengewinde
- **16**: Rohrstreben
- **17**: Halterung
- **18**: Befestigungselement
- **19**: Lagerbock
- **20**: Abschlussquerträger
- **21**: Halterung

## Patentansprüche

1. Fahrzeugrahmen (1) für ein Nutzfahrzeug mit zwei Rahmenlängsträgern (2), welche mit Querträgern verteilt über der Fahrzeuglänge mehrfach miteinander verbunden sind, wobei die Frontbereiche der beiden Rahmenlängsträger (2) mit einem Frontquerträger (3) miteinander verbunden sind, und wobei der Frontquerträger (3) über Verbindungskörper (4) an den Enden der Rahmenlängsträger (2) angebunden ist,
**dadurch gekennzeichnet,**
**dass** der Frontquerträger (3) als modulares und eine Mehrzahl von Konstruktionselementen (7, 10, 16) aufweisendes Schweißgerippe aufgebaut ist und als rahmenförmige, multifunktionale Trägereinheit zur Aufnahme von zumindest einem Kühlmodul (5, 6) ausgebildet ist, und
**dass** die Konstruktionselemente mit dem zumindest einen Kühlmodul (5, 6) verschachtelt sind, wobei zumindest zwei Konstruktionselemente (16) zwischen einem ersten Kühler (5) und einem zweiten Kühler (6) des zumindest einen Kühlmoduls (5, 6) angeordnet sind.

2. Fahrzeugrahmen (1) für ein Nutzfahrzeug nach Anspruch 1, **dadurch gekennzeichnet, dass** das im Frontquerträger (3) aufgenommene Kühlmodul (5, 6) zumindest einen Hauptkühler (5) und einen Zusatzkühler (6) aufweist.

3. Fahrzeugrahmen (1) für ein Nutzfahrzeug nach Anspruch 1 oder 2, **dadurch gekennzeichnet, dass** die Montage des Kühlmoduls im Frontquerträger (3) vor der Montage des Frontquerträgers (3) im Fahrzeugrahmen ausführbar ist.

4. Fahrzeugrahmen (1) für ein Nutzfahrzeug nach zumindest einem der vorgenannten Ansprüche, **dadurch gekennzeichnet, dass** die Konstruktionselemente zum modularen Aufbau des Frontquerträgers (3) insbesondere Pressteile, Halbzeuge wie Rohre, Bleche und /oder Schmiedeteile aufweisen.

5. Fahrzeugrahmen (1) für ein Nutzfahrzeug nach zumindest einem der vorgenannten Ansprüche, **dadurch gekennzeichnet, dass** im Frontquerträger (3) weiterhin zumindest ein Kältemittelkondensator und /oder ein Ladeluftkühler und / oder ein Ölkühler aufnehmbar ist.

6. Fahrzeugrahmen (1) für ein Nutzfahrzeug nach zumindest einem der vorgenannten Ansprüche, **dadurch gekennzeichnet, dass** ein bodenseitiger Rahmenteil des Frontquerträgers (3) als Frontunterfahrschutzprofil (7) ausgebildet ist, wobei dieser außenseitig Aufstiegsträger (8) aufweist.

7. Fahrzeugrahmen (1) für ein Nutzfahrzeug nach zumindest einem der vorgenannten Ansprüche, **dadurch gekennzeichnet, dass** der Frontquerträger (3) Aufnahmeelemente (9) für eine Abschleppeinrichtung aufweist, über die wahlweise ein Sonderquerträger und / oder eine Geräteplatte befestigbar ist.

8. Fahrzeugrahmen (1) für ein Nutzfahrzeug nach Anspruch 1, **dadurch gekennzeichnet, dass** der Frontquerträger (3) einen linken und einen rechten Trägerseitenteil (10) aufweist, wobei die Trägerseitenteile (10) senkrecht und im Wesentlichen parallel zueinander angeordnet sind und über zumindest eine und vorzugsweise zwei horizontal verlaufende Rohrstreben (16) miteinander verbunden sind.

9. Fahrzeugrahmen (1) für ein Nutzfahrzeug nach Anspruch 8, **dadurch gekennzeichnet, dass** die Trägerseitenteile (10) Halterungen (11) zur Aufnahme einer Fahrerhauslagerung (12) aufweisen.

10. Fahrzeugrahmen (1) für ein Nutzfahrzeug nach Anspruch 8, **dadurch gekennzeichnet, dass** der linke oder rechte Trägerseitenteil (10) jeweils einen Lagerbock (19) für die Aufnahme einer Lenkwellen-Zwischenlagerung und /oder eines Lenkwellen-Umlenkgetriebes aufweist.

11. Fahrzeugrahmen (1) für ein Nutzfahrzeug nach zumindest einem der vorgenannten Ansprüche, **dadurch gekennzeichnet, dass** der Frontquerträger (3) Halterungen (17) für Leitungsführungen wie Druckluftleitungen, elektrische Leitungen, Kältemittelleitungen, Ölleitungen und /oder Wasserleitungen aufweist.

12. Fahrzeugrahmen (1) für ein Nutzfahrzeug nach Anspruch 1, **dadurch gekennzeichnet, dass** der Frontquerträger (3) Befestigungselemente (18) für eine Stoßfänger- und /oder eine Beleuchtungseinheit aufweist.

13. Fahrzeugrahmen (1) für ein Nutzfahrzeug nach Anspruch 1, **dadurch gekennzeichnet, dass** der Frontquerträger (3) einen Abschlussquerträger (20) aufweist, an welchem zumindest der Zusatzkühler (6) und /oder ein Behälter sowie weitere externe Mittel montierbar sind, wobei der Abschlussquerträger (20) zwischen den oberen Enden des linken und rechten Trägerseitenteils (10) angeordnet ist.

14. Fahrzeugrahmen (1) für ein Nutzfahrzeug nach zumindest einem der vorgenannten Ansprüche, **dadurch gekennzeichnet, dass** der Frontquerträger (3) an einen entsprechend ausgebildeten Fahrschemel eines Nutzfahrzeugs mit Einzelradaufhängung an der Vorderachse montierbar ist, wobei die Halterungen (17) und / oder Lagerböcke (19) und / oder Befestigungselemente (18) anpassbar sind.

## Claims

1. Vehicle body frame (1) for a utility vehicle with two frame side members (2), which are connected to each other with cross members at multiple points along the vehicle length, whereby the front areas of the two frame side members (2) are connected to each other with a front cross member (3), and whereby the front cross member (3) is attached to the ends of the frame side members (2) with connecting members (4),
**characterised in that**
the front cross member (3) is designed as a modular welded skeleton featuring a number of design elements (7, 10, 16), and which front cross member is arranged as a frame-shaped, multifunctional carrier unit for the accommodation of at least one cooling module (5, 6), and
that the construction elements are nested with the minimum of one cooling module (5, 6), whereby at least two construction elements (16) are arranged between a first cooler (5) and a second cooler (6) of the minimum of one cooling module (5, 6).

2. Vehicle body frame (1) for a utility vehicle in accordance with claim 1, **characterised in that** the cooling module (5, 6) fitted in the front cross member (3) includes at least one primary cooler (5) and one auxiliary cooler (6).

3. Vehicle body frame (1) for a utility vehicle in accordance with claim 1 or 2, **characterised in that** the installation of the cooling module in the front cross member (3) may be carried out before the installation of the front cross member (3) in the vehicle body frame.

4. Vehicle body frame (1) for a utility vehicle in accordance with at least one of the claims specified above, **characterised in that** the design elements for the modular structure of the front cross member (3) include in particular moulded parts, semifinished products, such as pipes and panels and/or forged parts.

5. Vehicle body frame (1) for a utility vehicle in accordance with at least one of the claims specified above, **characterised in that** it remains possible to install at least a refrigerant condenser and/or an intercooler and/or an oil cooler in the front cross member (3).

6. Vehicle body frame (1) for a utility vehicle in accordance with at least one of the claims specified above, **characterised in that** a frame part of the front cross member (3) on the ground side is designed as a front underride protection profile (7), which underride protection profile features step unit mounts (8) on the outside.

7. Vehicle body frame (1) for a utility vehicle in accordance with claim 1, **characterised in that** the front cross member (3) includes mounting elements (9) for a towing device, which mounting elements may be used to optionally attach a special cross member and/or a mounting plate.

8. Vehicle body frame (1) for a utility vehicle in accordance with claim 1, **characterised in that** the front cross member (3) features a left-hand and a right-hand member side part (10), whereby the member side parts (10) are arranged vertically and essentially parallel to each other and are connected to each other with at least one and preferably two horizontally positioned tube struts (16).

9. Vehicle body frame (1) for a utility vehicle in accordance with claim 8, **characterised in that** the member side parts (10) feature mounts (11) for the accommodation of a cab mount (12).

10. Vehicle body frame (1) for a utility vehicle in accordance with claim 8, **characterised in that** the left-hand or right-hand member side part (10) each features a bearing block (19) for the accommodation of a steering shaft intermediate bearing and/or a steering shaft reversing gear.

11. Vehicle body frame (1) for a utility vehicle in accordance with at least one of the claims specified above, **characterised in that** the front cross member (3) features mounts (17) for cable routings, such as compressed air lines, electrical lines, refrigerant lines, oil lines and/or water lines.

12. Vehicle body frame (1) for a utility vehicle in accordance with claim 1, **characterised in that** the front cross member (3) features fastening elements (18) for a bumper and/or lighting unit.

13. Vehicle body frame (1) for a utility vehicle in accordance with claim 1, **characterised in that** the front cross member (3) features an end cross member (20), on which end cross member at least the auxiliary cooler (6) and/or a container and other external attachments may be fitted, whereby the end cross member (20) is arranged between the upper ends of the left-hand and the right-hand member side part (10).

14. Vehicle body frame (1) for a utility vehicle in accordance with at least one of the claims specified above, **characterised in that** the front cross member (3) may be fitted to an appropriately designed chassis subframe of a utility vehicle with independent wheel suspension on the front axle, whereby the mount (17) and/or fastening elements (18) are adjustable.

## Revendications

1. Cadre de véhicule (1) pour un véhicule industriel avec deux longerons de cadre (2), reliés plusieurs fois entre eux par des traverses réparties sur toute la longueur du véhicule, les parties frontales des deux longerons de cadre (2) étant reliées entre elles par une traverse frontale (3) et la traverse frontale (3) étant reliée aux extrémités des longerons de cadre (2) par des éléments de liaison (4),
**caractérisé en ce que**
la traverse frontale (3) est structurée comme ossature soudée modulaire et présentant une multitude d'éléments de montage (7, 10, 16) et est formée comme unité porteuse en forme de cadre et multifonctionnelle pour recevoir au moins un module de refroidissement (5, 6), et
les éléments de construction sont entrelacés avec au moins un des modules de refroidissement (5, 6), auquel cas au moins deux éléments de construction (16) sont disposés entre un premier radiateur (5) et un deuxième radiateur (6) d'au moins un module de refroidissement (5, 6).

2. Cadre de véhicule (1) pour un véhicule industriel selon la revendication 1, **caractérisé en ce que** le module de refroidissement (5, 6) logé dans la traverse frontale (3) présente au moins un radiateur principal (5) et un radiateur supplémentaire (6).

3. Cadre de véhicule (1) pour un véhicule industriel selon la revendication 1 ou 2, **caractérisé en ce que** le montage du module de refroidissement dans la traverse frontale (3) peut être réalisé avant le montage de la traverse frontale (3) dans le cadre du véhicule.

4. Cadre de véhicule (1) pour un véhicule industriel selon au moins une des revendications mentionnées précédemment, **caractérisé en ce que** les éléments de construction composant la structure modulaire de la traverse frontale (3) présentent en particulier des pièces embouties, des demi-produits tels que des tuyaux, des tôles et/ou des pièces forgées.

5. Cadre de véhicule (1) pour un véhicule industriel selon au moins une des revendications mentionnées précédemment, **caractérisé en ce que** la traverse frontale (3) peut accueillir en plus au moins un condenseur de frigorigène et/ou un radiateur d'air de suralimentation et/ou un radiateur d'huile.

6. Cadre de véhicule (1) pour un véhicule industriel selon au moins une des revendications mentionnées précédemment, **caractérisé en ce qu'**une pièce de cadre côté chaussée de la traverse frontale (3) est formée comme profilé de protection anti-encastrement avant, celui-ci présentant côté extérieur des supports de marchepied (8).

7. Cadre de véhicule (1) pour un véhicule industriel selon la revendication 1, **caractérisé en ce que** la traverse frontale (3) présente des éléments de fixation (9) pour un dispositif de remorquage, par le biais desquels au choix une traverse spéciale et/ou une plaque d'appareils peut être fixée.

8. Cadre de véhicule (1) pour un véhicule industriel selon la revendication 1, **caractérisé en ce que** la traverse frontale (3) présente une pièce latérale porteuse gauche et une pièce latérale porteuse droite (10), ces pièces latérales porteuses étant disposées verticalement et pour l'essentiel parallèlement l'une par rapport à l'autre et reliées entre elles par le biais d'au moins une et de préférence de deux entretoises tubulaires (16) orientées horizontalement.

9. Cadre de véhicule (1) pour un véhicule industriel selon la revendication 8, **caractérisé en ce que** les pièces latérales porteuses (10) présentent des supports (11) pour accueillir une suspension de cabine (12).

10. Cadre de véhicule (1) pour un véhicule industriel selon la revendication 8, **caractérisé en ce que** la pièce latérale porteuse gauche et la pièce latérale porteuse droite (10) présentent chacune un palier (19) pour fixer une suspension intermédiaire de l'arbre de direction et/ou un boîtier de renvoi de l'arbre de direction.

11. Cadre de véhicule (1) pour un véhicule industriel selon au moins une des revendications mentionnées précédemment, **caractérisé en ce que** la traverse frontale (3) présente des supports (17) pour les faisceaux de conduites et de câbles tels que des conduites pneumatiques, des câbles électriques, des conduites de frigorigène, des conduites d'huile et/ou des conduites d'eau.

12. Cadre de véhicule (1) pour un véhicule industriel selon la revendication 1, **caractérisé en ce que** la traverse frontale (3) présente des éléments de fixation (18) pour une unité de pare-chocs et/ou une unité d'éclairage.

13. Cadre de véhicule (1) pour un véhicule industriel selon la revendication 1, **caractérisé en ce que** la traverse frontale (3) présente une traverse finale (20) sur laquelle peut être monté au moins le radiateur supplémentaire (6) et/ou un réservoir ainsi que d'autres moyens externes, la traverse finale (20) étant disposée entre l'extrémité supérieure de la pièce latérale porteuse gauche et celle de droite (10).

14. Cadre de véhicule (1) pour un véhicule industriel selon au moins une des revendications mentionnées précédemment, **caractérisé en ce que** la traverse frontale (3) peut être montée sur un cadre auxiliaire formé en conséquence d'un véhicule industriel avec suspension à roues indépendantes sur l'essieu avant, le support (17) et/ou des éléments de fixation (18) pouvant être adaptés.
